# EUROPEAN PATENT SPECIFICATION

(11) **EP 3 523 540 B1**
(45) Date of publication and mention of the grant of the patent: **03.04.2024**
(21) Application number: 17857899.3
(22) Date of filing: 06.10.2017
(51) Int. Cl.: F04B 27/00, F04B 9/113, F04B 27/02, F15B 3/00, F04B 9/10, F04B 39/02, F04B 25/00, F04B 53/18, F04B 35/00, F04B 41/06

(54) **GAS INTENSIFIER WITH LUBRICATION**
GASVERSTÄRKER MIT SCHMIERUNG
MULTIPLICATEUR DE PRESSION DE GAZ À LUBRIFICATION

(30) Priority: 07.10.2016 FI 20165757
(43) Date of publication of application: 14.08.2019
(73) Proprietor: Metener Oy, 40640 Jyväskylä (FI)
(72) Inventor: KALMARI, Erkki, 41310 Leppävesi (FI); KALMARI, Johanna, 41310 Leppävesi (FI); LUOSTARINEN, Juha, 41310 Leppävesi (FI)
(74) Representative: Berggren Oy
(86) International application number: PCT/FI2017/050706
(87) International publication number: WO 2018/065672

(56) References cited:
- EP-A1- 0 247 459
- CN-Y- 2 809 263
- RU-C1- 2 119 596
- US-A- 1 729 430
- US-A- 4 512 151
- US-A- 4 512 151
- US-A- 4 761 118

## Description

### FIELD OF THE INVENTION

The present invention is related to increasing the pressure of gas. Particularly, but not by way of limitation, a hydraulically driven positive displacement gas intensifier with provision of a lubrication system is presented.

### BACKGROUND OF THE INVENTION

After or in connection with purification of raw biogas to obtain biomethane, the gas is at least temporarily stored in compressed form. Compression is often the most costly step in biogas treatment, as commonly used compression equipment has high maintenance expenses and low durability.

Drawbacks of using e.g. existing hydraulic compressors for elevating the pressure of the target gas, such as the aforementioned biogas, include wearing of parts due to friction, a rise in temperature of the equipment, and formation of soot, which lead to a shortening of the operating life of the compressor among other potential side effects.

Document US1729430 discloses a compressor with motor cylinder, a low pressure cylinder, and high pressure cylinder. The inner ends of the low pressure cylinder and high pressure cylinder have tubular extensions by which they are supported on a tank. The tank serves as a foundation for the compressor and as an oil reserve tank.

US4512151 presents an intensifier for water, where a lubricating chamber is provided in an intensifying cylinder. The intensifying cylinder has a first piston and second piston, between which the lubricating chamber is located.

### SUMMARY OF THE INVENTION

The objective is to present an intensifier with a lubrication system that will in addition provide cooling, which will at least reduce some of the problems stated above, and elongate the operating life compared to e.g. conventional dry-running hydraulic compressor types.

The objective is achieved by providing an intensifier according to claim 1 and a method for compressing a gas according to claim 9.

Having regard to the utility of various embodiments of the present invention, the provided lubrication system is economically executed, operates mechanically (automatically) and in a straightforward manner, thus making the system physically stable and easily maintained. The achieved effective circulation of lubricant provides for, besides lubrication of moving parts such as piston(s), specifically e.g. piston ring(s), within a compressor apparatus, also a desired cooling effect by transferring excessive heat away from the established hot spots such as the piston, which together increase both the life of the parts and the compressor in general. In preferred embodiments, the conduit through which lubricant is fed into the chamber has dimensions of such size that a substantial amount of lubricant mav be circulated, which leads to a more prominent cooling effect than that of conventional lubrication systems. A substantial diameter of the conduit also leads to easy delivery of the lubricant into the chamber. For example, for a compression chamber for gas with a length of 600-700 mm and diameter of 100-150 mm, a lubricator conduit with a diameter of 1,27 cm (0,5 inches) is advantageously utilized. Field trials have shown that the operating life of the aforesaid piston rings may be in some embodiments extended up to several times (e.g. from about 1000h to about 7000h) by the present solution. A further benefit of various embodiments of the present invention is given by potential reduction of soot etc. formation or elimination thereof.

In addition to being affordable and robust, the arrangement is readily scalable, as several intensifiers may be used, conducting the discharged gas to the suction inlet of another compression chamber to achieve a desired compression ratio, thus constituting a multistage compression system. One unit may be single- or multi-acting, i.e., have one or more compression chambers. Multistage compression may also be achieved in one intensifier, where gas compressed in one compression chamber is directed into another compression chamber with smaller volume in the same multi-acting intensifier. The enabled intensifier configurations can achieve an effective compression ratio, and depending on the embodiment, the arrangements may be portable.

In some use scenarios, an embodiment of the present invention may be adopted as a part of a more comprehensive process involving e.g. the use of chemical or other type of reactor. An intensifier according to the present invention may, however, be used to increase the pressure of any gas.

### BRIEF DESCRIPTION OF THE DRAWINGS

The present invention will be described in greater detail with reference to the accompanying drawings, in which:
- Figure 1: illustrates one embodiment of a gas intensifier (unit) according to the present invention.
- Figure 2: shows the flow of fluids in one of the gas chambers and the hydraulic chamber of the intensifier.
- Figure 3: is a multistage compression arrangement comprising several intensifier units according to one embodiment of the present invention.

### DETAILED DESCRIPTION OF THE INVENTION

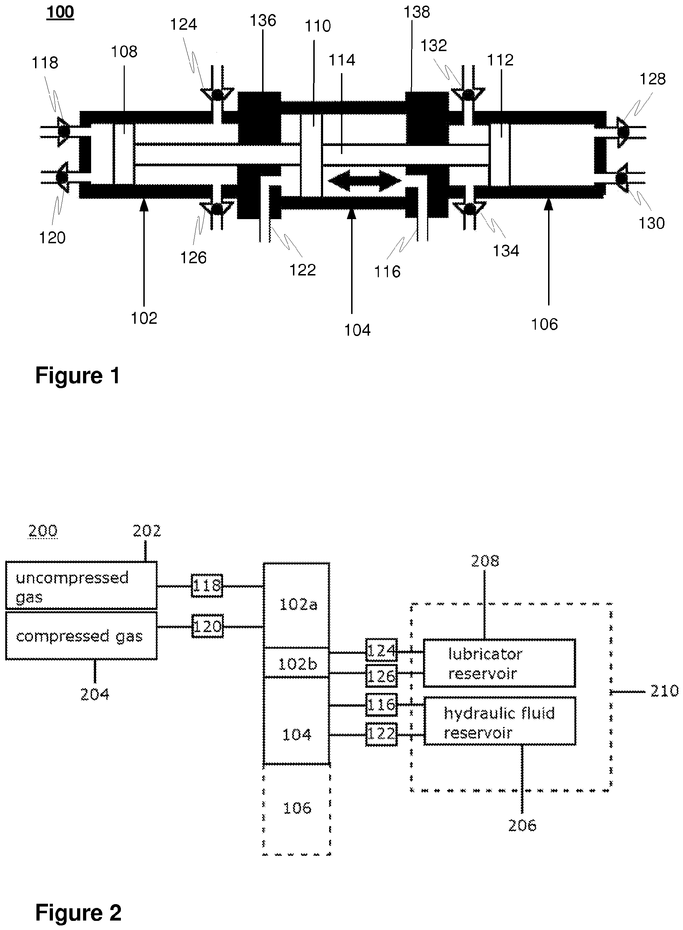

Figure 1 depicts one embodiment of a compressor device preferably in the form of an intensifier, or "booster", according to the present invention intended for increasing the pressure of a gas. That is, compression of gas using a compressor arrangement is the matter that is discussed. In some embodiments, the gas that the intensifier, or compressor, may be used to increase the pressure of may include biogas or natural gas.

The term "intensifier unit" refers hereafter to an intensifier device which comprises one (common) body of preferably rigid type. In some embodiments, the body may be of substantially monolithic nature defined by a single element or several permanently attached elements. In some other embodiments the body may comprise multiple functional elements such as chambers removably connected together by necessary fixing elements such as bolts.

In the shown embodiment, a single-stage double-acting intensifier unit is presented, but the fundamental principle of the invention may be utilized in a multi-stage intensifier unit. A single-acting intensifier unit is also feasible according to the present invention.

The intensifier (unit) 100 of Fig. 1 is presented as an oblong object in which the functional chambers are successively placed, but other shapes are also possible. The outward appearance of the intensifier 100 could generally resemble e.g. a cylindrical or rectangular tube defined by the outer walls of the successive chambers. According to the depicted embodiment, a gas chamber, essentially a gas cylinder 102, structurally preferably defining a substantially cylindrical shape also geometrically, is operatively connected to a hydraulic chamber or cylinder 104, which may further be connected to a second gas chamber 106. The operational connection is carried out by coaxially conjoining the fluid pistons 108, 110, and 112 of the chambers by at least one connecting element such as a plunger or rod 114. The gas chambers or, according to their intended use, compression chambers, 102, 106 comprise gas inlets 118 and 130, through which the uncompressed gas enters the chambers 102, 106, and outlets 120 and 128, through which compressed gas exits the chambers 102, 106.

In the embodiment of Fig. 1, the lubrication coupling is implemented through the lubrication fluid inlets 124 and 132 and lubrication fluid outlets 126 and 134. The aforementioned inlets and outlets 124, 126, 132, 134 of the gas chambers typically comprise, or are at least connected to, a pipe, tube, or other conduit, and a preferably check type valve for funneling the lubrication fluid in the proper direction.

The gas chambers may be separated from the hydraulic chamber by suitable separating elements 136 and 138 which may comprise one or more parts, such as a hydraulic connection rod seal assembly and a connection block or flange or other such suitable structures.

The hydraulic chamber 104 comprises inlets/outlets 116, 122 (whose inlet/outlet roles may change dynamically depending on the current working direction of the piston 110 as being easily appreciated by a person skilled in the art) for hydraulic fluid flow. In some embodiments the chamber, piston, rod, pipe(/tube/conduit), and/or separating element materials may generally include e.g. metal, alloy, cast iron, plastics, steel, stainless steel, aluminum, brass, bronze, ceramics, and/or nickel-alloy.

From a functional point of view, gas is brought into the first gas chamber 102 through an inlet 118, which permits flow into the chamber, while compressed gas exits the gas chamber 102 through the outlet 120, which permits flow out of the chamber 102. The second gas chamber 106 may have a substantially similar configuration with the inlet 130 and outlet 128.

Compression of gas in the chamber 102 is effectuated through the flow of hydraulic fluid. Hydraulic fluid that is conducted into the hydraulic chamber 104 via the inlet 116 causes the piston 110 to move, which, through the connecting rod 114, causes the fluid piston 108 to move, thereby compressing the gas in the gas chamber 102.

The compressed gas exits the chamber 102 via the outlet 120 and the direction of flow of the hydraulic fluid is reversed, allowing uncompressed gas to be recurrently conducted into the gas chamber via the inlet 118.

The work cycle in the chamber 106, which in the embodiment of Fig. 1 is on the other side of the hydraulic chamber 104, is substantially opposite, i.e. the compression of gas therein 106 occurs while the uncompressed gas is conducted into the chamber 102.

In a multi-acting intensifier unit, the alternating direction of flow of the hydraulic fluid thus determines in which gas chamber 102, 106 the compression takes place.

In terms of lubrication, in various embodiments the lubricating fluid may be fed into the first gas chamber 102 through the inlet 124, situated e.g. next to the separating element 136, and exit the chamber 102 through the outlet 126, a similar arrangement being generally suitable also for the second gas chamber 106, with corresponding inlet 132, outlet 134, and separating element 138.

An embodiment of the flow of fluids to and from the first gas chamber 102 and the hydraulic chamber 104 of the intensifier of Fig. 1 are seen at 200 in Figure 2.

In this embodiment, gas not yet compressed by the intensifier 100 is conducted from a storage unit 202 into the intermediate space (volume) 102a, residing between the gas inlet 118 or outlet 120 and the fluid piston 108 within a gas chamber 102. After compression, the gas travels through the outlet 120 into a storage unit 204 intended for the compressed gas.

The hydraulic fluid that drives the compression is conducted to and from the hydraulic chamber 104 through the inlet and outlet 116 or 122, respectively. The fluid may be supplied from the hydraulic fluid reservoir 206, into which it may also be returned. The hydraulic fluid may, for instance, be hydraulic oil or other fluid that is suitable for the application.

In one embodiment, as the piston 108 is being driven to compress the gas by decreasing the volume 102a, the volume of the substantially neighboring space 102b, located between the piston 108 and the separating element 136, increases, leading to the formation of a vacuum or generally a space of lower pressure in contrast to the environment including the inlet 124 and/or reservoir 208, which will cause or at least facilitate lubrication fluid to flow into the space 102b through the inlet 124 and/or at least spread therein. A similar setup may be employed in the second gas chamber 106.

In the embodiment of Fig. 2, the volume of space 102b decreases as the direction of movement of piston 108 is reversed with the reversal of the direction of flow of the hydraulic fluid, causing a pressure increase and leading or at least facilitating the lubricating fluid to flow out of the space 102b through the outlet 126 and back into the lubricator reservoir 208, thus creating or enhancing a circulation of the lubricating fluid.

At least one drive entity 210 is employed, comprising one or more elements such as pumps for circulating the hydraulic fluid and/or lubricant. E.g. electric motor(s) may be utilized to drive the pump(s) or other circulation-enhancing mechanism of the hydraulic and/or lubricating fluid.

The lubrication fluid, typically essentially liquid, may in various embodiments optionally be the same fluid that is used as hydraulic fluid, e.g. oil. Alternatively, different lubrication fluid such as different oil may be utilized.

In the embodiment of Fig.2, the lubrication fluid is contained in a separate lubricator reservoir 208, but in other embodiments one or more common elements such as a reservoir, pump and/or motor, could be utilized among the hydraulic and lubrication circulation systems.

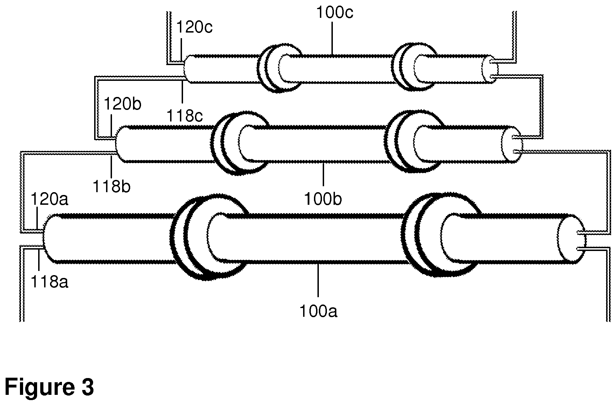

Two or more intensifier units 100 may be coupled to implement a multistage compression system. In Figure 3, three intensifier units 100a, 100b, and 100c, with structure according to Fig. 1, form an arrangement that may be used for multistage gas compression. The gas chamber volumes of unit 100b may be smaller than that of unit 100a, and the gas chamber volumes of unit 100c may be smaller than that of unit 100b. The uncompressed/original state gas enters the intensifier unit 100a through the inlet 118a and leaves the unit after compression through the outlet 120a. This gas, after one stage of compression, enters the intensifier unit 100b through the inlet 118b, and is further compressed, after which it passes through the outlet 120b and is conducted to the intensifier unit 100c through the inlet 118c. In the embodiment of Fig. 3, the gas is thus compressed in three stages. Accordingly, after compression in unit 100c, the gas is discharged through the outlet 120c, and is passed to a storage unit. By way of example only, compression ratio of one unit or stage may fall within range from about 2:1 to about 20:1.

## Claims

1. A hydraulically driven intensifier (100) for increasing pressure of gas, said intensifier comprising a compression chamber (102) operatively connected to an adjacent hydraulic chamber (104) further comprised in the intensifier, the intensifier additionally comprising a piston (108) for compressing the gas partitioning the compression chamber (102) into a gas compression chamber (102a) and an intermediate space (102b), wherein the intermediate space (102b) is located between the piston (108) and the hydraulic chamber (104) and is adjacent to the hydraulic chamber (104), and a lubricant coupling (124, 126) in the compression chamber of the intensifier for circulating lubricating fluid at least within the intermediate space (102b) for cooling and lubricating the piston, **characterized by** the lubricant coupling comprising an inlet (124) and an outlet (126), through which lubricant enters and exits the intermediate space and by the intensifier comprising at least one element (210) selected from the group consisting of: pump and electric pump; the at least one element (210) being provided in order to circulate at least the lubricating fluid.

2. The intensifier of claim 1, wherein the flow of hydraulic fluid and the accompanying change in volume of the intermediate space cause formation of a vacuum or generally reduced pressure therein, which may enhance flow of lubricant into said space.

3. The intensifier of any preceding claim, wherein said inlet and outlet further comprises a pipe or tube, and/or a check valve.

4. The intensifier of claim 3, wherein the inlet and outlet connect a vessel (208) in which the lubricant resides to the intermediate space of the compression chamber, constituting a circulation of the lubricant.

5. The intensifier of any preceding claim, wherein the lubricating fluid is the same hydraulic fluid, preferably liquid, more preferably hydraulic oil, that is used in the hydraulic chamber.

6. The intensifier of any preceding claim, comprising a second compression chamber (106) operatively connected to the hydraulic chamber, located on the opposite site of the hydraulic chamber to the first compression chamber (102).

7. A multistage compression system for gas, comprising two or more intensifiers according to any preceding claim, connected in series

8. Use of the intensifier of any preceding claim for increasing the pressure of biogas or natural gas.

9. A method for compressing gas utilizing a hydraulically driven intensifier (100) to increase the pressure of gas, said intensifier comprising a compression chamber (102) operatively connected to an adjacent hydraulic chamber (104) further comprised in the intensifier, the intensifier additionally comprising a piston (108) for compressing the gas partitioning the compression chamber (102) into a gas compression chamber (102a) and an intermediate space (102b), wherein the intermediate space (102b) is located between the piston (108) and the hydraulic chamber (104) and is adjacent to the hydraulic chamber (104), employing a lubricant coupling (124, 126) in the compression chamber of the intensifier, where lubricating fluid is circulated at least within the intermediate space (102b) of the compression chamber to cool and lubricate the piston wherein the lubricant coupling comprises an inlet (124) and an outlet (126) through which lubricant enters and exits the intermediate space and at least one element (210) selected from the group consisting of: pump and electric pump is provided; the at least one element (210) being provided in order to circulate at least the lubricating fluid.

## Patentansprüche

1. Hydraulisch angetriebener Druckverstärker (100) zum Erhöhen des Drucks von Gas, wobei der Druckverstärker eine Kompressionskammer (102) umfasst, die mit einer benachbarten Hydraulikkammer (104), die ebenfalls in dem Druckverstärker enthalten ist, in Wirkverbindung steht, wobei der Druckverstärker zusätzlich einen Kolben (108) zum Komprimieren des Gases umfasst, der die Kompressionskammer (102) in eine Gaskompressionskammer (102a) und einen Zwischenraum (102b) unterteilt, wobei der Zwischenraum (102b) zwischen dem Kolben (108) und der Hydraulikkammer (104) angeordnet ist und an die Hydraulikkammer (104) angrenzt, und eine Schmiermittelkupplung (124, 126) in der Kompressionskammer des Druckverstärkers zum Zirkulieren von Schmierfluid zumindest innerhalb des Zwischenraums (102b) zum Kühlen und Schmieren des Kolbens aufweist, **dadurch gekennzeichnet, dass** die Schmiermittelkupplung einen Einlass (124) und einen Auslass (126) umfasst, durch die Schmiermittel in den Zwischenraum eintritt und aus ihm austritt, und dass der Druckverstärker mindestens ein Element (210) umfasst, das aus der Gruppe ausgewählt ist, die aus Folgendem besteht: Pumpe und Elektropumpe; wobei das mindestens eine Element (210) vorgesehen ist, um zumindest die Schmierflüssigkeit zu zirkulieren.

2. Der Druckverstärker nach Anspruch 1, wobei die Strömung der Hydraulikflüssigkeit und die damit einhergehende Änderung des Volumens des Zwischenraums die Bildung eines Vakuums oder eines allgemein reduzierten Drucks darin bewirkt, was die Strömung des Schmiermittels in den Raum verbessern kann.

3. Der Druckverstärker nach einem der vorhergehenden Ansprüche, wobei der Einlass und der Auslass ferner ein Rohr oder einen Schlauch und/oder ein Rückschlagventil umfassen.

4. Der Druckverstärker nach Anspruch 3, wobei der Einlass und der Auslass ein Gefäß (208), in dem sich das Schmiermittel befindet, mit dem Zwischenraum der Kompressionskammer verbinden, wodurch eine Zirkulation des Schmiermittels entsteht.

5. Der Druckverstärker nach einem der vorhergehenden Ansprüche, wobei die Schmierflüssigkeit dieselbe Hydraulikflüssigkeit, vorzugsweise Flüssigkeit, noch bevorzugter Hydrauliköl, ist, die in der Hydraulikkammer verwendet wird.

6. Der Druckverstärker nach einem der vorhergehenden Ansprüche umfasst eine zweite Kompressionskammer (106), die mit der Hydraulikkammer in Wirkverbindung steht und sich an der der ersten Kompressionskammer (102) gegenüberliegenden Seite der Hydraulikkammer befindet.

7. Ein mehrstufiges Kompressionssystem für Gas, das zwei oder mehr Druckverstärker nach einem der vorhergehenden Ansprüche umfasst, die in Reihe geschaltet sind.

8. Verwendung des Verstärkers nach einem der vorangehenden Ansprüche zur Erhöhung des Drucks von Biogas oder Erdgas.

9. Ein Verfahren zum Verdichten von Gas unter Verwendung eines hydraulisch angetriebenen Druckverstärkers (100), um den Druck von Gas zu erhöhen, wobei der Druckverstärker eine Kompressionskammer (102) umfasst, die mit einer benachbarten Hydraulikkammer (104), die ebenfalls in dem Druckverstärker enthalten ist, in Wirkverbindung steht, wobei der Druckverstärker zusätzlich einen Kolben (108) zum Komprimieren des Gases umfasst, der die Kompressionskammer (102) in eine Gaskompressionskammer (102a) und einen Zwischenraum (102b) unterteilt, wobei der Zwischenraum (102b) zwischen dem Kolben (108) und der Hydraulikkammer (104) angeordnet ist und an die Hydraulikkammer (104) angrenzt, wobei eine Schmiermittelkupplung (124, 126) in der Kompressionskammer des Verstärkers verwendet wird, wobei Schmierflüssigkeit zumindest innerhalb des Zwischenraums (102b) der Kompressionskammer zirkuliert wird, um den Kolben zu kühlen und zu schmieren, wobei die Schmiermittelkupplung einen Einlass (124) und einen Auslass (126) umfasst, durch die Schmiermittel in den Zwischenraum eintritt und aus ihm austritt, und mindestens ein Element (210), das aus der Gruppe ausgewählt ist, die aus Folgendem besteht: Pumpe und Elektropumpe; wobei das mindestens eine Element (210) vorgesehen ist, um zumindest die Schmierflüssigkeit zu zirkulieren.

## Revendications

1. Intensificateur à entraînement hydraulique (100) pour augmenter la pression d'un gaz, ledit intensificateur comprenant une chambre de compression (102) reliée fonctionnellement à une chambre hydraulique adjacente (104) incluse en outre dans l'intensificateur, l'intensificateur comprenant en outre un piston (108) pour comprimer le gaz séparant la chambre de compression (102) en une chambre de compression de gaz (102a) et un espace intermédiaire (102b), dans lequel l'espace intermédiaire (102b) est situé entre le piston (108) et la chambre hydraulique (104) et est adjacent à la chambre hydraulique (104),
et un raccord lubrifiant (124, 126) dans la chambre de compression de l'intensificateur pour faire circuler le fluide lubrifiant au moins à l'intérieur de l'espace intermédiaire (102b) pour refroidir et lubrifier le piston, **caractérisé par** le raccord de lubrifiant comprenant une entrée (124) et une sortie (126), à travers lesquelles le lubrifiant entre et sort de l'espace intermédiaire et par l'intensificateur comprenant au moins un élément (210) choisi dans le groupe constitué de :
une pompe et une pompe électrique ; l'au moins un élément (210) étant prévu pour faire circuler au moins le fluide lubrifiant.

2. Intensificateur selon la revendication 1, dans lequel le débit du fluide hydraulique et le changement de volume de l'espace intermédiaire qui l'accompagne provoquent la formation d'un vide ou d'une pression généralement réduite à l'intérieur, ce qui peut augmenter le débit du lubrifiant dans ledit espace.

3. Intensificateur selon une quelconque revendication précédente, dans lequel lesdites entrée et sortie comprennent en outre un tuyau ou un tube et/ou un clapet anti-retour.

4. Intensificateur selon la revendication 3, dans lequel l'entrée et la sortie relient un récipient (208) dans lequel réside le lubrifiant jusqu'à l'espace intermédiaire de la chambre de compression, constituant une circulation du lubrifiant.

5. Intensificateur selon une quelconque revendication précédente, dans lequel le fluide lubrifiant est le même fluide hydraulique, de préférence liquide, plus préférablement de l'huile hydraulique, qui est utilisé dans la chambre hydraulique.

6. Intensificateur selon une quelconque revendication précédente, comprenant une seconde chambre de compression (106) reliée fonctionnellement à la chambre hydraulique, située sur le site opposé de la chambre hydraulique par rapport à la première chambre de compression (102).

7. Système de compression à plusieurs étages pour gaz, comprenant deux ou plusieurs intensificateurs selon une quelconque revendication précédente, connectés en série.

8. Utilisation de l'intensificateur selon une quelconque revendication précédente pour augmenter la pression du biogaz ou du gaz naturel.

9. Procédé de compression de gaz utilisant un intensificateur à entraînement hydraulique (100) pour augmenter la pression du gaz, ledit intensificateur comprenant une chambre de compression (102) reliée fonctionnellement à une chambre hydraulique adjacente (104) incluse en outre dans l'intensificateur, l'intensificateur comprenant en outre un piston (108) pour comprimer le gaz séparant la chambre de compression (102) en une chambre de compression de gaz (102a) et un espace intermédiaire (102b), dans lequel l'espace intermédiaire (102b) est situé entre le piston (108) et la chambre hydraulique (104) et est adjacent à la chambre hydraulique (104), utilisant un raccord lubrifiant (124, 126) dans la chambre de compression de l'intensificateur, où le fluide lubrifiant circule au moins dans l'espace intermédiaire (102b) de la chambre de compression pour refroidir et lubrifier le piston, dans lequel le raccord de lubrifiant comprend une entrée (124) et une sortie (126) à travers lesquelles le lubrifiant entre et sort de l'espace intermédiaire et au moins un élément (210) sélectionné dans le groupe constitué des éléments suivants : une pompe et une pompe électrique sont fournies ; l'au moins un élément (210) étant prévu pour faire circuler au moins le fluide lubrifiant.
